# EUROPEAN PATENT SPECIFICATION

(11) **EP 3 715 046 B1**
(45) Date of publication and mention of the grant of the patent: **29.12.2021**
(21) Application number: 19196071.5
(22) Date of filing: 06.09.2019
(51) Int. Cl.: B23Q 3/06, B23B 31/30, B25B 5/06

(54) **WHEEL HUB TOOL POSITIONING FIXTURE**
POSITIONIERUNGSVORRICHTUNG FÜR RADNABEN
DISPOSITIF DE POSITIONEMENT POUR UN MOYEU DE ROUE

(30) Priority: 29.03.2019 CN 201910253488
(43) Date of publication of application: 30.09.2020
(73) Proprietor: Citic Dicastal Co., Ltd., 066011 Quinhuangdao, Heibei (CN)
(72) Inventor: Liu, Libo, Qinhuangdao, Heibei 066011 (CN); He, Yudong, Qinhuangdao, Heibei 066011 (CN)
(74) Representative: Gong, Jinping

(56) References cited:
- WO-A1-2006/003683
- CN-A- 106 392 717
- FR-A1- 2 237 729

## Description

### Field

The disclosure relates to the technical field of automobile part processing, in particular to a wheel hub tool positioning fixture.

### Background

Wheel hubs are barrel-shaped metal parts which are arranged on the inner contours of tires for supporting the tires, and the centers of the wheel hubs are mounted on shafts. The wheel hubs are also called rims, steel rims, wheels and tire rims. There are various kinds of wheel hubs according to different diameters, widths, molding modes and materials. Aluminum alloy wheel hubs have gained popularity because of the advantages of light weight, high thermal conductivity and stylish appearance. Therefore, aluminum alloy wheel hubs have been widely used in automobiles.

In the machining process of the aluminum alloy wheel hubs, a tool positioning fixture is one of the indispensable devices for machining of the wheel hubs and mainly used for clamping and fixing the wheel hubs in the wheel hub machining process. In the prior art, when the wheel hubs are clamped by the aluminum alloy wheel hub tool positioning fixture, the fixture and the aluminum alloy wheel hubs are rigidly connected generally, and the wheel hubs are damaged to a certain degree when the clamping force is high. Such a fixture is e.g. known from Patent Document CN 106 392 717 A, which discloses a wheel tool positioning fixture comprising a machine frame, a driving mechanism, an air pump, and a plurality of clamping members.

Accordingly, a wheel hub tool positioning fixture is needed for overcoming or at least reducing the defects in the prior art.

### Summary

The disclosure aims to solve the technical problem that a wheel hub is damaged by rigid connection with a fixture.

According to the following technical solution adopted by the disclosure,
A wheel hub tool positioning fixture, comprising a machine frame, a driving mechanism, an air pump, a plurality of clamping members and receding assemblies;
The multiple clamping members are evenly distributed on the machine frame in the circumferential direction; each clamping member comprises a baffle, storage grooves and airbags; each storage groove is formed in the side surface, opposite to the wheel hub, of the corresponding baffle; each airbag is arranged in the corresponding storage groove and is connected with the air pump; and each airbag protrudes from the side surface of the corresponding baffle after being inflated and expanded;
Each receding assembly corresponds to one of the clamping members; each receding assembly comprises a connecting block, a sliding rod, an elastic member and two cushion blocks; the two ends of each sliding rod are each connected with the corresponding cushion block; the cushion blocks are connected with the driving mechanism and driven by the driving mechanism to move in the radial direction of the machine frame; the sliding rod is slidably arranged on the sliding rod in a sleeving mode; the elastic member is arranged on the sliding rod in a sleeving mode, and the two ends of the elastic member are connected with the connecting block and the cushion block correspondingly; and the bottom ends of the baffles are connected with the connecting blocks.

Optionally, the fixture further comprises proximity switches and a control unit; and the control unit is connected with the proximity switches, the driving mechanism and the air pump;
The proximity switches are arranged on the side surfaces, opposite to the wheel hub, of the baffles and used for transmitting a contact signal to the control unit after making contact with the wheel hub;
The control unit is used for stopping operation of the driving mechanism and starting the air pump after receiving the contact signal of the proximity switches.

Optionally, the middles of the side surfaces, opposite to the wheel hub, of the baffles are provided with mounting grooves, one end of the proximity switches are fixedly mounted in the mounting grooves, and the other ends of the proximity switches protrude from the side surfaces of the baffles.

Optionally, the airbags are connected with the air pump through air guide pipes.

Optionally, each air guide pipe comprises a first telescopic pipe and a second telescopic pipe;
One end of each first telescopic pipe is connected with the air pump; one end of each second telescopic pipe is slidably sealed in and sleeved with the other end of the corresponding first telescopic pipe; and the other end of each second telescopic pipe is connected with the airbag; or
One end of each first telescopic pipe is connected with the air pump; one end of each second telescopic pipe is slidably sealed and arranged outside the other end of the corresponding first telescopic pipe in a sleeving mode; and the other end of each second telescopic pipe is connected with the airbag.

Optionally, each baffle is evenly provided with a plurality of the airbags from top to bottom; each second telescopic pipe are connected with a plurality of air inlet pipes distributed from top to bottom; and each air inlet pipe is connected with the corresponding airbag.

Optionally, each airbag is internally provided with a plurality of annular ribs; the ribs are connected with the inner wall of the airbag; the multiple ribs are distributed in the radial direction of a machine frame; and the plane where each rib is located is perpendicular to the radial direction of the machine frame.

Optionally, the ribs are provided with through holes.

Optionally, the driving mechanism comprises a motor, screws and screw sleeves;
The motor is fixed in the middle of the machine frame; one end of each screw is connected with the motor; the other end of each screw is limited to the outer wall of the machine frame; and the screws are driven by the motor to rotate;
The screw sleeves are in threaded connection with the screws in a sleeving mode; the cushion blocks are arranged on the screw sleeves; and the screws drive the screw sleeves to translate in the radial direction of the machine frame when rotating.

Optionally, an output shaft of the motor is sleeved with a driving bevel gear; one end of each screw is sleeved with a driven bevel gear; and the driving bevel gear is engaged with the driven bevel gears.

According to one or more embodiments of the disclosure, the fixture has the following beneficial effects that:
According to the wheel hub tool positioning fixture, by arranging the airbags on the side surfaces, making contact with a wheel hub, of the baffles, after the baffles are driven by the driving mechanism to move and make contact with the wheel hub, the airbags are ejected to make contact with the wheel hub, the baffles move inwards on the receding assemblies in the radial direction of the machine frame; through soft contact between the airbags and the wheel hub, damage to the wheel hub due to high stress in the positioning process is avoided, the fixture can be applied to positioning of the wheel hub made of a soft aluminum alloy material, and the clamping and disassembling processes are convenient.

### Brief Description of the Drawings

The technical and industrial significance of the features, advantages and exemplary embodiments of the disclosure will be described with reference to the attached drawings, and the same reference signs indicate the same elements in the drawings, wherein
Fig.1 is a schematic structural view of a wheel hub tool positioning fixture according to the disclosure;
Fig.2 is a partial enlarged view of a clamping member of the wheel hub tool positioning fixture according to the disclosure;
Fig.3 is a partial enlarged view of a receding assembly of the wheel hub tool positioning fixture according to the disclosure.

Wherein,
1. Machine frame;
2. Driving mechanism, 21. Motor, 22. Screws, 23. Screw sleeves, 24. Driving bevel gear, 25. Driven bevel gears;
3. Air pump;
4. Clamping members, 41. Baffles, 42. Storage grooves, 43. Airbags;
5. Receding assemblies, 51. Connecting blocks, 52. Sliding rods, 53. Elastic members, 54. Cushion blocks;
6. Proximity switches;
7. Air guide pipes, 71. First telescopic pipes, 72. Second telescopic pipes, 73. Air inlet pipes, 74. Intermediate pipes;
8. Ribs.

### Detailed Description of the Embodiments

Exemplary embodiments of the disclosure are described in detail below with reference to the attached drawings. The description of the exemplary embodiments is for illustrative purposes only and is not a limitation of the disclosure and application or usage thereof. Moreover, the dimensions and proportions of all components in the figures are merely illustrative and do not strictly correspond to actual products.

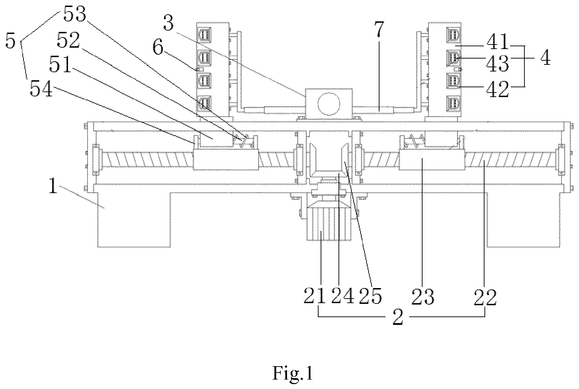

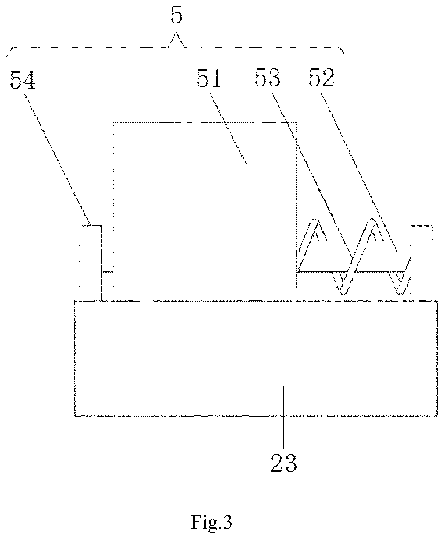

The embodiment of the disclosure provides a wheel hub tool positioning fixture. As shown in Figs.1 to 3, the tool positioning fixture comprises a machine frame 1, a driving mechanism 2, an air pump 3, a plurality of clamping members 4 and receding assemblies 5. The multiple clamping members 4 are evenly distributed on the machine frame 1 in the circumferential direction. Each clamping member 4 comprises a baffle 41, storage grooves 42 and airbags 43. The storage grooves 42 are formed in the side surfaces, opposite to a wheel hub, of the baffles 41. The airbags 43 are arranged in the storage grooves 42 and connected with the air pump 3. The airbags 43 protrude from the side surfaces of the baffles 41 after being inflated and expanded. Each receding assembly 5 corresponds to the corresponding clamping member 4. Each receding assembly 5 comprises a connecting block 51, a sliding rod 52, an elastic member 53 and two cushion blocks 54. The two ends of each sliding rod 52 are connected with the cushion blocks correspondingly 54. The cushion blocks 54 are connected with the driving mechanism 2 and driven by the driving mechanism 2 to move in the radial direction of the machine frame 1. The connecting blocks 51 are slidably arranged on the sliding rods 52 in a sleeving mode. The elastic members 53 are arranged on the sliding rods 52 in a sleeving mode. The two ends of each elastic member 53 are connected with the corresponding connecting block 51 and the corresponding cushion block 54. The bottoms end of the baffles 41 are connected with the connecting blocks 51.

The operation principle of the wheel hub tool positioning fixture provided by the embodiment of the disclosure is described below:

During usage, a wheel hub is placed on a machine frame 1, a plurality of clamping members 4 are located on the inner side of the wheel hub. When the wheel hub is clamped, the driving mechanism 2 is operated to drive cushion blocks 54 to move outwards in the radial direction of the machine frame 1, thus, baffles 41 are enabled to move outwards in the radial direction. After cushion blocks 54 make contact with the inner wall of the wheel hub, the driving mechanism 2 is stopped operating, an air pump 3 is started to inflate airbags 43, and the airbags 43 protrude from the side surfaces of the cushion blocks 54 after being expanded and make contact with the inner wall of the wheel hub. The cushion blocks 54 have a tendency to move inwards in the radial direction of the machine frame 1 under the reaction of the airbags 43. Since connecting blocks 51 are slidably arranged on the sliding rods 52 in a sleeving mode, the connecting blocks 51 and the cushion blocks 54 are connected through elastic members 53, and the baffles 41 move inwards in the radial direction of the machine frame 1 along with the connecting blocks 51, the airbags 43 make contact with the inner wall of the wheel hub, and the baffles 41 do not make contact with the wheel hub in the clamping process. When the wheel hub needs to be unclamped, the driving mechanism 2 is operated to drive the cushion blocks 54 to move inwards in the radial direction of the machine frame 1, so that the baffles 41 move inwards in the radial direction along with the cushion blocks 54, and the wheel hub can be taken out.

It shows that according to the wheel hub tool positioning fixture provided by the embodiment of the disclosure, by arranging the airbags 43 on the side surfaces, making contact with the wheel hub, of the baffles 41, the baffles 41 are driven by the driving mechanism 2 to move so as to make contact with the wheel hub, then the airbags 43 are ejected and make contact with the wheel hub, and the baffles 41 move inwards in the radial direction of the machine frame 1 on the receding assemblies 5. Through soft contact between the airbags 43 and the wheel hub, damage to the wheel hub due to high stress in the positioning process is avoided, the fixture can be applied to positioning of the wheel hub made of a soft aluminum alloy material, and the clamping and disassembling processes are convenient.

Wherein, the multiple clamping members 4 are evenly distributed on the machine frame 1 in the circumferential direction. For example, three clamping members 4 can be arranged, and the angle between every two adjacent clamping members 4 is 120°; or four clamping members 4 can be arranged, and the angle between every two adjacent clamping members 4 is 90°.

In the embodiment of the disclosure, the receding assemblies 5 are used for driving the baffles 41 to move, by arranging the sliding rods 52 and the elastic members 53, the baffles 41 can be retracted inwards after being stressed. As an example, springs arranged on the sliding rods in a sleeving mode can be used as the elastic members 53. Furthermore, one end of each elastic member 53 can be connected to a cushion block 54 of an inner ring, and the other end of each elastic member 53 is connected with a connecting block 51. In this way, when the baffles 41 are retracted when being stressed, the elastic members 53 are in a compressed state when being stressed by pressing force, and are less likely to be loosened and fail compared with the stretching state, and thus the service life of the wheel hub positioning fixture is prolonged.

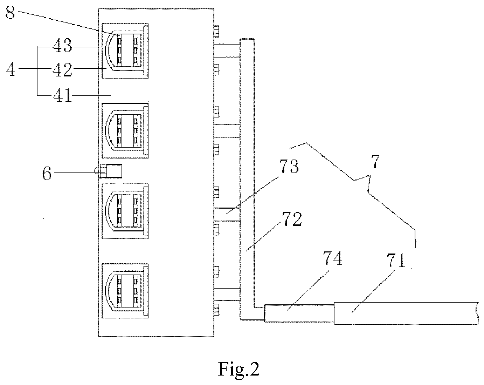

Optionally, as shown in Fig.1 and Fig.2, the wheel hub tool positioning fixture provided by the embodiment of the disclosure further comprises proximity switches 6 and a control unit; the control unit is connected with the proximity switches 6, the driving mechanism 2 and the air pump 3; the proximity switches 6 are arranged on the side surfaces, opposite to the wheel hub, of the baffles 41 and used for transmitting a contact signal to the control unit after making contact the wheel hub; the control unit is used for stopping the driving mechanism 2 after receiving the contact signal of the proximity switches 6 and starting the air pump 3. In this way, automatic control over the clamping process is achieved, and the baffles 41 are prevented from moving excessively and damaging the wheel hub.

In order to facilitate mounting of the proximity switches 6, mounting grooves are formed in the middles of the side surfaces, opposite to the wheel hub, of the baffles 41, one ends of the proximity switches 6 are fixedly mounted in the mounting grooves, and the other ends of the proximity switches 6 penetrate through the side surfaces of the baffles 41. Thus, the proximity switches 6 are mounted firmly and can transmit a contact signal before the baffles 41 collide with the wheel hub.

It can be understood that the portions, protruding from the side surfaces of the baffles 41, of the proximity switches 6 are smaller than the portions which protrude from the side surfaces of the baffles 41 after being expanded of the airbags 43, so that the airbags 43 can apply force to clamp the wheel hub.

In the embodiment of the disclosure, the air pump 3 is used for inflating and expanding the airbags 43, as shown in Fig.1 and Fig.2, the airbags 43 and the air pump 3 are connected through air guide pipes 7, and inflation is facilitated through the air guide pipes 7.

The airbags 43 are arranged in storage grooves in the baffles 41 and move along with the baffles 41, the air pump 3 is fixed on the machine frame 1, and the distance between the air pump 3 and the airbags 43 changes during use. As an example, in order to adapt to the change of the distance between the air pump 3 and the airbags 43, hoses can be used as the air guide pipes 7, for example, rubber pipes.

As another example, rigid pipes can be used as the air guide pipes 7, as shown in Fig.2, each air guide pipe 7 comprises a first telescopic pipe 71 and a second telescopic pipe 72; one end of each first telescopic pipe 71 is connected with the air pump 3, one end of each second telescopic pipe 72 is slidably sealed in and sleeved with the other end of the corresponding first telescopic pipe 71, and the other end of each second telescopic pipe 72 is connected with the airbags 43; or one end of each first telescopic pipe 71 is connected with the air pump 3, one end of each second telescopic pipe 72 is slidably sealed and arranged outside the other end of the corresponding first telescopic pipe 71 in a sleeving mode, and the other end of each second telescopic pipe 72 is connected with the airbags 43.

In this way, when the distance between the air pump 3 and the airbags 43 is changed, the length of the air guide pipes 7 is adjustable on the basis of sealed connection through relative sliding of the first telescopic pipes 71 and the corresponding second telescopic pipes 72.

Furthermore, as shown in Fig.2, each air guide pipe 7 can further comprise an intermediate pipe 74; the two ends of each intermediate pipe 74 are slidably connected with the corresponding first telescopic tube 71 and the corresponding second telescopic tube 72 in a sealed mode, and thus the fixture can adapt to positioning of wheel hubs of different sizes. Optionally, a plurality of intermediate pipes 74 can be arranged, and the multiple intermediate pipes 74 are sequentially and slidably sealed and arranged in a sleeving mode, so that the length adjustment range of the air guide pipes 7 is enlarged.

In order to improve the clamping positioning effect on a wheel hub, as shown in Fig.1 and Fig.2, a plurality of airbags 43 are evenly distributed on each baffle 41 from top to bottom, a plurality of air inlet pipes 73 distributed from top to bottom are connected with second telescopic pipes 72, and each air inlet pipe 73 is connected with the corresponding airbag 43. By arranging the multiple airbags 43, the wheel hub is evenly stressed, and the fixing effect is good. Correspondingly, the multiple air inlet pipes 73 arranged on the second telescopic pipes 72 are matched with the airbags 43 in number.

Optionally, according to the wheel hub tool positioning fixture provided by the embodiment of the disclosure, as shown in Fig.2, a plurality of ribs 8 are arranged in the airbag 43; the ribs 8 are connected to the inner wall of the airbag 43; the multiple ribs 8 are distributed in the radial direction of the machine frame 1; and the plane in which each rib 8 is located is perpendicular to the radial direction of the machine frame 1. The inflation and expansion direction of the airbags 43 is controlled by arranging the ribs 8, so that the airbags 43 are uniformly unfolded in the radial direction of the machine frame 1, and the unfolding process is safer and more orderly.

In order to facilitate connection between the ribs 8 and the airbags 43, the ribs 8 are provided with through holes. In this way, connecting ropes on the inner walls of the airbags 43 penetrate through the through holes in the ribs 8, and thus the ribs 8 are connected into the airbags 43.

According to the wheel hub tool positioning fixture provided by the embodiment of the disclosure, a driving mechanism 2 is used for driving receding assemblies 5 and the clamping members 4 to move. Optionally, as shown in Fig.1, the driving mechanism 2 can comprise a motor 21, screws 22 and screw sleeves 23. The motor 21 is fixed in the middle of the machine frame 1. One end of each screw 22 is connected with the motor 21, the other end of each screw 22 is limited to the outer wall of the machine frame 1, and the screws are driven by the motor 21 to move. The screw sleeves 23 are in threaded connection with the screws 22 in a sleeving mode, cushion blocks 54 are arranged on the screw sleeves 23, and the screws 22 drive the screw sleeves 23 to translate in the radial direction of the machine frame 1 during rotating.

In this way, the screw sleeves 23 are connected with the cushion blocks 54, the cushion blocks 54 are connected with the baffles 41, rotation of the screw sleeves 23 is restricted, and the screws 22 drive the screw sleeves 23 to translate when rotating. By changing the rotation direction of an output shaft of the motor 21, the translation direction of the screw sleeves 23 can be controlled.

Wherein, the inner side wall of the outer wall of the machine frame 1 can be provided with bearing seats, the other end of each screw 22 is fixed in the corresponding bearing seat, and thus the screws 22 are rotationally limited to the outer wall of the machine frame 1.

Furthermore, as shown in Fig.1, the output shaft of the motor 21 is sleeved with a driving bevel gear 24, one end of each screw 22 is sleeved with a driven bevel gear 25, and the driving bevel gear 24 is engaged with the driven bevel gear 25. Thus, rotation of the output shaft of the motor 21 is converted into rotation of the screws 22 through gear transmission.

The numbers of the driven bevel gears 25, the screws 22, the screw sleeves 23 and the like are equal to that of the clamping members 4. The driving bevel gear 24 can mesh with the multiple driven bevel gears 25 so as to drive the multiple screws 22 to rotate, and the motor 21 drives the multiple clamping members 4 to move, so that the structure of the wheel hub tool positioning fixture is relatively simple, and the multiple clamping members 4 are synchronously moved.

It should be noted that in the disclosure, relational terms such as first and second are used merely for distinguishing one entity or operation from another entity or operation, and do not necessarily require or imply any such actual relationship or order between such entities or operations. Furthermore, the term 'comprise' or 'include' or any other variations thereof is intended to encompass a non-exclusive inclusion, so that a process, method, item or device that comprises a plurality of elements comprises not only those elements but also other elements which are not explicitly listed, or elements that are inherent to such a process, method, item or device. An element defined by the phrase 'comprising a reference structure' does not exclude the presence of additional identical elements in the process, method, item or device that comprises the element without more restrictions.

While the embodiments of the present disclosure have been shown and described, it will be understood by those skilled in the art that various changes, modifications, substitutions and variations may be made in the embodiments without departing from the scope of the disclosure which is limited by the appended claims.

## Claims

1. A wheel hub tool positioning fixture, wherein the clamp comprises a machine frame (1), a driving mechanism (2), an air pump (3), a plurality of clamping members (4) and receding assemblies (5);
the multiple clamping members (4) are evenly distributed on the machine frame (1) in the circumferential direction, each clamping member (4) comprises a baffle (41), storage grooves (42) and airbags (43); the storage grooves (42) are formed in the side surfaces, opposite to a wheel hub, of the baffles (41); the airbags (43) are arranged in the storage grooves (42) and connected with the air pump (3); and the airbags (43) protrude from the side surfaces of the baffles (41) after being inflated and expanded; and
each receding assembly (5) corresponds to one of the clamping members (4); each receding assembly (5) comprises a connecting block (51), a sliding rod (52), an elastic member (53) and two cushion blocks (54); the two ends of each sliding rod (52) are each connected with the corresponding cushion block (54); the cushion blocks (54) are connected with the driving mechanism (2) and driven by the driving mechanism (2) to move in the radial direction of the machine frame (1); the connecting block (51) is slidably arranged on the sliding rod (52) in a sleeving mode; the elastic member (53) is arranged on the sliding rod (52) in a sleeving mode, and the two ends of the elastic member (53) are connected with the connecting block (51) and the cushion block (54); and the bottom ends of the baffles (41) are connected with the connecting blocks (51).

2. The wheel hub tool positioning fixture according to claim 1, wherein the fixture further comprises proximity switches (6) and a control unit, and the control unit are connected with the proximity switches (6), the driving mechanism (2) and the air pump (3);
the proximity switches (6) are arranged on the side surfaces, opposite to the wheel hub, of the baffles (41) and used for transmitting a contact signal to the control unit after making contact with the wheel hub; and
the control unit is used for stopping operation of the driving mechanism (2) and starting the air pump (3) after receiving the contact signal of the proximity switches (6).

3. The wheel hub tool positioning fixture according to claim 2, wherein mounting grooves are formed in the middles of the side surfaces, opposite to the wheel hub, of the baffles (41), one ends of the proximity switches (6) are fixedly mounted in the mounting grooves, and the other ends of the proximity switches (6) protrude from the side surfaces of the baffles (41).

4. The wheel hub tool positioning fixture according to claim 1, wherein the airbags (43) are connected with the air pump (3) through air guide pipes (7).

5. The wheel hub tool positioning fixture according to claim 4, wherein each air guide pipe (7) comprises a first telescopic pipe (71) and a second telescopic pipe (72);
one end of each first telescopic pipe (71) is connected with the air pump (3), one end of each second telescopic pipe (72) is slidably sealed in and sleeved with the other end of the corresponding first telescopic pipe (71), and the other end of each second telescopic pipe (72) is connected with the airbags (43); or
one end of each first telescopic pipe (71) is connected with the air pump (3), one end of each second telescopic pipe (72) is slidably sealed and arranged outside the other end of the corresponding first telescopic pipe (71) in a sleeving mode, and the other end of each second telescopic pipe (72) is connected with the airbags (43).

6. The wheel hub tool positioning fixture according to claim 5, wherein each baffle (41) is evenly provided with a plurality of airbags (43) from top to bottom; each second telescopic pipe (72) is provided with a plurality of air inlet pipes (73) distributed from top to bottom; and each air inlet pipe (73) is connected with the corresponding airbag (43).

7. The wheel hub tool positioning fixture according to claim 1, wherein each airbag (43) is internally provided with a plurality of annular ribs (8); the ribs (8) are connected to the inner wall of the airbag (43); the multiple ribs (8) are distributed in the radial direction of the machine frame (1); and the plane in which each rib (8) is located is perpendicular to the radial direction of the machine frame (1).

8. The wheel hub tool positioning fixture according to claim 7, wherein the ribs (8) are provided with through holes.

9. The wheel hub tool positioning fixture according to claim 1, wherein the driving mechanism (2) comprises a motor (21), screws (22) and screw sleeves (23);
the motor (21) is fixed in the middle of the machine frame (1); one end of each screw (22) is connected with the motor (21), and the other end of each screw (22) is limited to the outer wall of the machine frame (1); and the screws are driven by the motor (21) to rotate; and
the screw sleeves (23) are in threaded connection with the screws (22) in a sleeving mode, the cushion blocks (54) are arranged on the screw sleeve (23), and the screws (22) drive the screw sleeves (23) to translate in the radial direction of the machine frame (1) when rotating.

10. The wheel hub tool positioning fixture according to claim 9, wherein an output shaft of the motor (21) is sleeved with a driving bevel gear (24), one end of each screw (22) is sleeved with a driven bevel gear (25), and the driving bevel gear (24) is engaged with the driven bevel gears (25).

## Patentansprüche

1. Positionierungsvorrichtung eines Werkzeugs für Radnaben, wobei die Vorrichtung als Klemmeinrichtung ein Maschinengestell (1), einen Antriebsmechanismus (2), eine Luftpumpe (3), eine Vielzahl von Klemmelementen (4) und Rückzugsanordnungen (5) umfasst;
wobei die mehreren Klemmelemente (4) in Umfangsrichtung gleichmäßig auf dem Maschinengestell (1) verteilt sind, jedes Klemmelement (4) umfassend eine Anschlagplatte (41), Aufnahmenuten (42) und Airbags (43); wobei die Aufnahmenuten (42) in den einer Radnabe gegenüberliegenden Seitenflächen der Anschlagplatte (41) ausgebildet sind; die Airbags (43) in den Aufnahmenuten (42) angeordnet und mit der Luftpumpe (3) verbunden sind; und die Airbags (43) von den Seitenflächen der Anschlagplatte (41) vorstehen, nachdem sie aufgeblasen und expandiert wurden; und
wobei jede Rückzugsanordnung (5) einem der Klemmelemente (4) entspricht, jede Rückzugsanordnung (5) umfassend einen Verbindungsblock (51), eine Gleitstange (52), ein elastisches Element (53) und zwei Polsterblöcke (54); wobei die beiden Enden jeder Gleitstange (52) jeweils mit dem entsprechenden Polsterblock (54) verbunden sind; die Polsterblöcke (54) mit dem Antriebsmechanismus (2) verbunden sind und durch den Antriebsmechanismus (2) angetrieben werden, um sich in radialer Richtung des Maschinengestells (1) zu bewegen; der Verbindungsblock (51) gleitend auf der Gleitstange (52) in einem Hülsenmodus angeordnet ist; das elastische Element (53) an der Gleitstange (52) in einem Hüllenmodus angeordnet ist und die beiden Enden des elastischen Elements (53) mit dem Verbindungsblock (51) und dem Polsterblock (54) verbunden sind; und die unteren Enden der Anschlagplatte (41) mit den Verbindungsblöcken (51) verbunden sind.

2. Positionierungsvorrichtung eines Werkzeugs für Radnaben nach Anspruch 1, wobei die Vorrichtung als Klemmeinrichtung ferner Näherungsschalter (6) und eine Steuereinheit umfasst, wobei die Steuereinheit mit den Näherungsschaltern (6), dem Antriebsmechanismus (2) und der Luftpumpe (3) verbunden ist;
wobei die Näherungsschalter (6) an den der Radnabe gegenüberliegenden Seitenflächen der Anschlagplatte (41) angeordnet sind und zur Übertragung eines Kontaktsignals an die Steuereinheit nach Kontaktierung der Radnabe vorgesehen sind; und
wobei die Steuereinheit zum Stoppen des Antriebsmechanismus (2) und zum Starten der Luftpumpe (3) nach Empfang des Kontaktsignals der Näherungsschalter (6) vorgesehen ist.

3. Positionierungsvorrichtung eines Werkzeugs für Radnaben nach Anspruch 2, wobei in den Mitten der der Radnabe gegenüberliegenden Seitenflächen der Anschlagplatte (41) Montagenuten ausgebildet sind, die einen Enden der Näherungsschalter (6) fest in den Montagenuten montiert sind, und die anderen Enden der Näherungsschalter (6) aus den Seitenflächen der Anschlagplatte (41) ragen.

4. Positionierungsvorrichtung eines Werkzeugs für Radnaben nach Anspruch 1, wobei die Airbags (43) mit der Luftpumpe (3) durch Luftführungsrohre (7) verbunden sind.

5. Positionierungsvorrichtung eines Werkzeugs für Radnaben nach Anspruch 4, wobei jedes Luftführungsrohr (7) ein erstes Teleskoprohr (71) und ein zweites Teleskoprohr (72) umfasst;
wobei ein Ende jedes ersten Teleskoprohres (71) mit der Luftpumpe (3) verbunden ist, ein Ende jedes zweiten Teleskoprohres (72) in dem anderen Ende des entsprechenden ersten Teleskoprohres (71) in Hüllenmodus verschiebbar abgedichtet und angeordnet ist, und das andere Ende jedes zweiten Teleskoprohres (72) mit den Airbags (43) verbunden ist; oder
wobei ein Ende jedes ersten Teleskoprohres (71) mit der Luftpumpe (3) verbunden ist, ein Ende jedes zweiten Teleskoprohres (72) außerhalb des anderen Endes des entsprechenden ersten Teleskoprohres (71) in Hüllenmodus verschiebbar abgedichtet und angeordnet ist, und das andere Ende jedes zweiten Teleskoprohres (72) mit den Airbags (43) verbunden ist.

6. Positionierungsvorrichtung eines Werkzeugs für Radnaben nach Anspruch 5, wobei jede Ablenkplatte (41) gleichmäßig von oben nach unten mit einer Vielzahl von Airbags (43) versehen ist; jedes zweite Teleskoprohr (72) mit einer Vielzahl von Lufteinlassrohren (73) versehen ist, die von oben nach unten verteilt sind; und jedes Lufteinlassrohr (73) mit dem entsprechenden Airbag (43) verbunden ist.

7. Positionierungsvorrichtung eines Werkzeugs für Radnaben nach Anspruch 1, wobei jeder Airbag (43) intern mit einer Vielzahl von ringförmigen Rippen (8) versehen ist; die Rippen (8) mit der Innenwand des Airbags (43) verbunden sind; die mehreren Rippen (8) in radialer Richtung des Maschinengestells (1) verteilt sind; und die Ebene, in der sich jede Rippe (8) befindet, senkrecht zur radialen Richtung des Maschinengestells (1) ist.

8. Positionierungsvorrichtung eines Werkzeugs für Radnaben nach Anspruch 7, wobei die Rippen (8) mit Durchgangslöchern versehen sind.

9. Positionierungsvorrichtung eines Werkzeugs für Radnaben nach Anspruch 1, wobei der Antriebsmechanismus (2) einen Motor (21), Schrauben (22) und Schraubenhülsen (23) umfasst;
wobei der Motor (21) in der Mitte des Maschinengestells (1) befestigt ist; ein Ende jeder Schraube (22) mit dem Motor (21) verbunden ist und das andere Ende jeder Schraube (22) auf die Außenwand des Maschinengestells (1) begrenzt ist, und die Schrauben durch den Motor (21) angetrieben werden, um sich zu drehen; und
wobei die Schraubhülsen (23) mit den Schrauben (22) in Hüllenmodus in Gewindeverbindung stehen, die Polsterblöcke (54) auf der Schraubhülse (23) angeordnet sind, und die Schrauben (22), beim Drehen, die Schraubhülsen (23) an treiben, um die in radialer Richtung des Maschinengestells (1) zu verschieben.

10. Positionierungsvorrichtung eines Werkzeugs für Radnaben nach Anspruch 9, wobei eine Abtriebswelle des Motors ( 21 ) mit einem antreibenden Kegelrad ( 24 ) aufgesetzt versehen ist, ein Ende jeder Schraube ( 22 ) mit einem angetriebenen Kegelrad ( 25) aufgesetzt versehen ist, wobei das antreibende Kegelrad (24) mit den angetriebenen Kegelrad ( 25) in Eingriff steht.

## Revendications

1. Une fixation de positionnement d'outil de moyeu de roue, dans laquelle le serrage comprend un châssis de machine (1), un mécanisme d'entraînement (2), une pompe à air (3), une pluralité d'éléments de serrage (4) et des ensembles de recul (5);
les multiples éléments de serrage (4) sont uniformément répartis sur le châssis de machine (1) dans la direction circonférentielle, chaque élément de serrage (4) comprend un déflecteur (41), des rainures de stockage (42) et des coussins gonflables (43); les rainures de stockage (42) sont formées dans les surfaces latérales, opposées à un moyeu de roue, des chicanes (41); les coussins gonflables (43) sont disposés dans les rainures de stockage (42) et reliés à la pompe à air (3); et les coussins gonflables (43) font saillie des surfaces latérales des chicane (41) après avoir été gonflés et déployés; et
chaque ensemble de recul (5) correspond à l'un des élément de serrage (4); chaque ensembles de recul (5) comprend un bloc de connexion (51), une tige coulissante (52), un élément élastique (53) et deux blocs de coussin (54); les deux extrémités de chaque tige coulissante (52) sont chacune reliées au bloc de coussin correspondant (54); les blocs de coussin (54) sont reliés au mécanisme d'entraînement (2) et entraînés par le mécanisme d'entraînement (2) pour se déplacer dans la direction radiale du châssis de machine (1); le bloc de connexion (51) est disposé de manière coulissante sur la tige coulissante (52) dans un mode gainage; l'élément élastique (53) est disposé sur la tige coulissante (52) dans un mode gainage, et les deux extrémités de l'élément élastique (53) sont reliées au bloc de connexion (51) et au bloc de coussin (54); et les extrémités inférieures des chicanes (41) sont reliées aux blocs de connexion (51).

2. Le fixation de positionnement d'outil de moyeu de roue selon la revendication 1, dans lequel le fixation comprend en outre des commutateurs de proximité (6) et une unité de commande, et l'unité de commande est connectée aux commutateurs de proximité (6), au mécanisme d'entraînement (2) et à la pompe à air (3);
les commutateurs de proximité (6) sont disposés sur les surfaces latérales, opposées au moyeu de roue, des chicanes (41) et utilisés pour transmettre un signal de contact à l'unité de commande après avoir pris contact avec le moyeu de roue; et
l'unité de commande est utilisée pour arrêter le fonctionnement du mécanisme d'entraînement (2) et démarrer la pompe à air (3) après avoir reçu le signal de contact des commutateurs de proximité (6).

3. Le fixation de positionnement d'outil de moyeu de roue selon la revendication 2, dans lequel des rainures de montage sont formées au milieu des surfaces latérales, opposées au moyeu de roue, des chicanes (41), une extrémité des commutateurs de proximité (6) est montée de manière fixe dans les rainures de montage et les autres extrémités des commutateur de proximité (6) dépassent des surfaces latérales des chicanes (41).

4. Le fixation de positionnement d'outil de moyeu de roue selon la revendication 1, dans lequel les coussins gonflables (43) sont reliés à la pompe à air (3) par des tuyaux de guidage d'air (7).

5. Le fixation de positionnement d'outil de moyeu de roue selon la revendication 4, dans lequel chaque tuyau de guidage d'air (7) comprend un premier tuyau télescopique (71) et un second tuyau télescopique (72);
une extrémité de chaque premier tuyau télescopique (71) est reliée à la pompe à air (3), une extrémité de chaque deuxième tuyau télescopique (72) est scellée de manière coulissante et gainée avec l'autre extrémité du premier tuyau télescopique correspondant (71), et l'autre extrémité de chaque deuxième tuyau télescopique (72) est connectée aux coussins gonflables (43); ou
une extrémité de chaque premier tuyau télescopique (71) est reliée à la pompe à air (3), une extrémité de chaque deuxième tuyau télescopique (72) est scellée de manière coulissante et disposée à l'extérieur de l'autre extrémité du premier tuyau télescopique (71) correspondant dans un mode gainage, et l'autre extrémité de chaque deuxième tube télescopique (72) est reliée aux coussins gonflables (43).

6. Le fixation de positionnement d'outil de moyeu de roue selon la revendication 5, dans lequel chaque chicane (41) est uniformément pourvu d'une pluralité de coussins gonflables (43) de haut en bas; chaque deuxième tuyau télescopique (72) est pourvu d'une pluralité de tuyaux d'entrée d'air (73) répartis de haut en bas; et chaque tuyau d'entrée d'air (73) est connecté au coussin gonflable correspondant (43).

7. Le fixation de positionnement d'outil de moyeu de roue selon la revendication 1, dans lequel chaque coussin gonflable (43) est pourvu intérieurement d'une pluralité de nervures annulaires (8); les nervures (8) sont reliées à la paroi interne du coussins gonflable (43); les multiples nervures (8) sont réparties dans la direction radiale du châssis de machine (1); et le plan dans lequel chaque nervure (8) est située est perpendiculaire à la direction radiale du châssis de machine (1).

8. Le fixation de positionnement d'outil de moyeu de roue selon la revendication 7, dans lequel les nervures (8) sont pourvues de trous traversants.

9. Le fixation de positionnement d'outil de moyeu de roue selon la revendication 1, dans lequel le mécanisme d'entraînement (2) comprend un moteur (21), des vis (22) et des mâchons à vis (23);
le moteur (21) est fixé au milieu du châssis de machine (1); une extrémité de chaque vis (22) est reliée au moteur (21), et l'autre extrémité de chaque vis (22) est limitée à la paroi extérieure du châssis de la machine (1); et les vis sont entraînées en rotation par le moteur (21); et
les mâchons à vis (23) sont en connexion filetée avec les vis (22) en mode gainage, les blocs de coussin (54) sont disposés sur la machon à vis (23) et les vis (22) entraînent les machon à vis (23) pour se déplacer dans la direction radiale du châssis de machine (1) lors de la rotation.

10. Le fixation de positionnement d'outil de moyeu de roue selon la revendication 9, dans lequel un arbre de sortie du moteur (21) est gainé d'un engrenage conique d'entraînement (24), une extrémité de chaque vis (22) est gainée d'un engrenage conique d'entraîné (25), et l'engrenage conique d'entraînement (24) est en prise avec les engrenages coniques d'entraîné (25).
